# EUROPÄISCHE PATENTSCHRIFT

(11) **EP 1 136 306 B1**
(45) Veröffentlichungstag und Bekanntmachung des Hinweises auf die Patenterteilung: **18.10.2006**
(21) Anmeldenummer: 01106635.4
(22) Anmeldetag: 16.03.2001
(51) Int. Cl.: B60K 37/00, B62D 25/14, B23K 10/02

(54) **Instrumententräger**
Instrument carrier
Porte-instruments

(30) Priorität: 23.03.2000 DE 20005471 U
(43) Veröffentlichungstag der Anmeldung: 26.09.2001
(73) Patentinhaber: BENTELER AG, D-33104 Paderborn (DE)
(72) Erfinder: Mainka, Christoph, 59065 Hamm (DE); Hitz, Andreas, 59597 Erwitte (DE)
(74) Vertreter: Griepenstroh, Jörg

(56) Entgegenhaltungen:
- EP-A- 0 691 173
- DE-A- 19 802 542
- DE-A- 19 831 047
- DE-U- 29 916 470

## Beschreibung

Die Erfindung betrifft einen Instrumententräger mit integrierter Luftführung. Ein solcher Instrumententräger wird zwischen die A-Säulen eines Personenkraftwagens eingegliedert. Er übernimmt die Halterung und Lagesicherung beispielsweise der Lenksäule, von Airbags usw. Darüberhinaus ist in den Instrumententräger eine Luftführung eingegliedert, um mit oder ohne Klimagerät den Innenraum eines Personenkraftwagens an bestimmten Stellen belüften zu können. Dazu sind in Längsrichtung des Instrumententrägers an verschiedenen Stellen Luftaustritte vorgesehen.

Eine bekannte Bauart eines Instrumententrägers weist ein innerhalb von metallischen Schalen angeordnetes Kunststoffrohr als Luftführung auf. Die Wanddicke des Kunststoffrohrs ist gering. Auch der Abstand des Kunststoffrohrs zu den Schalen ist gering. Um die Schalen statt eines hohen schraubtechnischen Aufwands einfach schweißtechnisch verbinden zu können, hat man bislang das Elektronenstrahl-Schweißverfahren eingesetzt. Elektronenstrahl-Schweißverfahren zählen zu den wärmearmen Schweißverfahren, wie sie durch die DE-U-299 16 470, welches den nächsten Stand der Technik beschreibt, als vorteilhaft betrachtet werden.

Hierbei wird der Elektronenstrahl auf die zu verbindenden Bereiche der Schalen fokussiert, wodurch das Kunststoffrohr keinen nachteiligen Temperaturbeanspruchungen ausgesetzt ist.

Der Einsatz des Elektronenstrahl-Schweißverfahrens ist aber mit einem vergleichsweise hohen gerätetechnischen Aufwand verbunden. Auch ist es hierbei erforderlich, die zu verschweißenden Teile relativ zum örtlich fixierten Elektronenstrahl zu bewegen. Dadurch können bislang nur vergleichsweise einfache Schweißnähte mit lediglich geringen Krümmungen gelegt werden. Die Praxis ist somit in der Konfiguration der ein Kunststoffrohr umhüllenden Schalen eingeschränkt. Es müssen Kompromisse zwischen den optimalen lufttechnischen Anforderungen einerseits und den Möglichkeiten der Eingliederung in den Bereich zwischen zwei A-Säulen geschlossen werden.

Andere Schweißverfahren kommen ebenfalls bei der Herstellung rohrartiger Strukturen zum Einsatz, wie sie in der DE-A-198 31 047 beschrieben werden Zu nennen ist das Laserschweißen, Plasmaschweißen oder MIG-/MAG-/WIG-Schweißen.

Der Erfindung liegt ausgehend vom Stand der Technik die Aufgabe zugrunde, einen Instrumententräger mit integrierter Luftführung zu schaffen, der einfacher herzustellen ist und welcher gezielter sowohl den lufttechnischen Anforderungen als auch den Einbausituationen in Personenkraftwagen angepasst werden kann.

Die Lösung dieser Aufgabe besteht nach der Erfindung in den Merkmalen des Anspruchs 1.

Kern der Erfindung ist der Einsatz des Plasmaschweißens mit düsenfernem Wirkfokus zur Verbindung der Schalen. Der hiermit verbundene besondere Vorteil liegt darin, dass der Plasmastrahl einwandfrei auf die zu verschweißenden Bereiche der zu verbindenden Schalen gerichtet werden kann, ohne dass das Material des Kunststoffrohrs in nachteiliger Weise angegriffen wird. Wesentlich ist ferner, dass nunmehr der Plasmastrahl mittels eines Roboters geführt werden kann, so dass auch vergleichsweise komplizierte Schweißkurven kein Problem darstellen. Damit sind die Schalen des Instrumententrägers wesentlich gezielter an die jeweiligen Einbaubedingungen im Personenkraftwagen unter Beachtung einer optimalen Luftführung anpassbar.

Die Verbindung der Schalen erfolgt über radial abstehende und aneinander liegende Flansche. Das erleichtert nicht nur den Schweißvorgang, sondern stellt außerdem noch eine Sicherung gegen eine eventuelle Beschädigung des Kunststoffrohrs dar. Grund ist, dass die Stirnflächen der Flansche ausreichend weit zum Kunststoffrohr distanziert werden können.

Die Distanz des Kunststoffrohrs zu den Schalen kann auf verschiedene Weise bewirkt werden. Eine bevorzugte Maßnahme sehen die Merkmale des Anspruchs 2 vor. Danach stützt sich das Kunststoffrohr durch angeformte Nocken an den Innenwänden der Schalen ab. Die Nocken können aus dem Material des Kunststoffrohrs geformt oder auch angeformt sein. Sie erweisen sich speziell dort als vorteilhaft, wo die Schalen unter anderem auch aus Steifigkeitsgründen bei verminderter Wanddicke ein mehreckiges Profil haben.

Dank des Einsatzes des Plasmaschweißverfahrens ist es nun nach Anspruch 3 möglich, die Schalen überall dort mit angeschweißten oder ausgeprägten Anbauteilen zu versehen, wo dies teils im Sinne der jeweiligen Geräteanforderungen, teils unter Berücksichtigung einer optimalen Luftführung sinnvoll ist. Die Lage der Schweißnaht spielt nur eine untergeordnete Rolle.

Die Erfindung erlaubt es darüberhinaus, dass gemäß den Merkmalen des Anspruchs 4 die Schalen aus Aluminium oder einer Aluminiumlegierung gefertigt werden können.

Es ist allerdings auch denkbar, dass nach Anspruch 5 die Schalen aus Stahlblech bestehen.

Unabhängig davon, welches Material zum Einsatz gelangt, kann in Verbindung mit dem Plasmaschweißverfahren ein hochtragfähiger und dennoch hinsichtlich der Wanddicken sowohl der Schalen als auch des Kunststoffrohrs leichter Instrumententräger bereitgestellt werden.

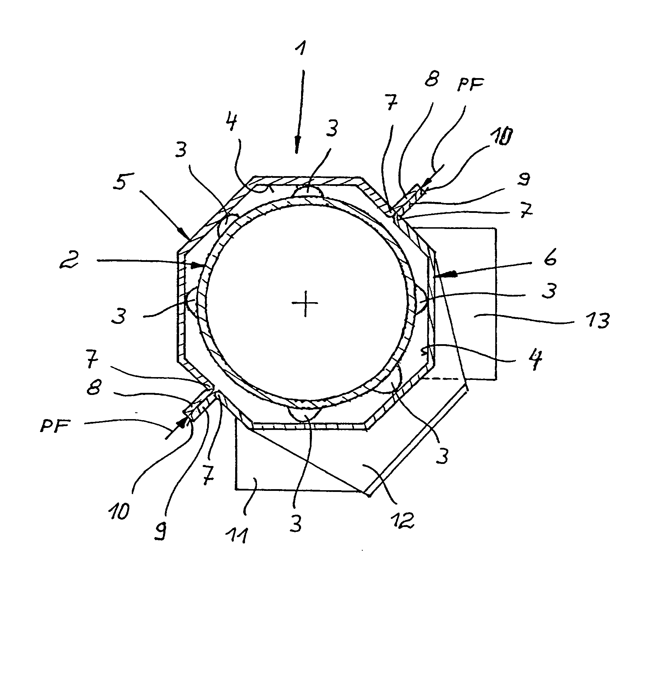

Die Erfindung ist nachfolgend anhand eines in der Zeichnung dargestellten Ausführungsbeispiels näher erläutert.

Veranschaulicht ist ein Instrumententräger 1 im vertikalen Querschnitt. Der Instrumententräger 1 ist in nicht näher dargestellter Weise zwischen die A-Säulen eines Personenkraftwagens eingegliedert.

Der Instrumententräger 1 umfasst ein dünnwandiges Kunststoffrohr 2, das über außenseitig liegende Nocken 3 an den Innenwänden 4 von zwei mehreckigen, ebenfalls dünnwandigen Schalen 5, 6 abgestützt ist. Die Schalen 5, 6 bestehen aus einer Aluminiumlegierung und weisen an ihren Rändern 7 radial abstehende Flansche 8, 9 auf, die flächig aneinander liegen.

Die Stirnflächen 10 der Flansche 8, 9 sind durch Plasmaschweißen mit düsenfernem Wirkfocus verbunden, was lediglich durch die dargestellten Pfeile Pf veranschaulicht ist.

Des Weiteren ist zu erkennen, dass die Schalen 5, 6 mit diversen konsolenartigen Anbauteilen 11, 12, 13 zum Haltern beispielsweise von Airbags und einer Lenksäule versehen sind. Beim Ausführungsbeispiel sind die Anbauteile 11-13 aus der Schale 6 geprägt.
- 1 -: Instrumententräger
- 2-: Kunststoffrohr
- 3-: Nocken an 2
- 4-: Innenwände von 5, 6
- 5-: Schale
- 6-: Schale
- 7-: Ränder von 5, 6
- 8-: Flansche von 5
- 9-: Flansche von 6
- 10-: Stirnflächen von 8, 9
- 11 -: Anbauteil
- 12-: Anbauteil
- 13-: Anbauteil

- Pf -: Pfeile (Plasmaschweißen)

## Patentansprüche

1. Instrumententräger mit integrierter Luftführung, der zwischen die A-Säulen eines Personenkraftwagens eingliederbar ist und aus mindestens zwei miteinander verbundenen metallischen Schalen (5, 6) sowie einem von den Schalen (5, 6) umschlossenen Kunststoffrohr (2) besteht, wobei das Kunststoffrohr (2) mit radialem Abstand zu den Schalen (5, 6) distanziert ist, und wobei die Schalen (5, 6) radial abstehende und aneinander anliegende Flansche (8, 9) aufweisen, **dadurch gekennzeichnet, dass** die Stirnflächen (10) der Flansche (8, 9) durch Plasmaschweißen mit düsenfernem Wirkfokus verbunden sind.

2. Instrumententräger nach Anspruch 1, bei welchem sich das Kunststoffrohr (2) durch angeformte Nocken (3) an den Innenwänden (4) der Schalen (5, 6) abstützt.

3. Instrumententräger nach Anspruch 1 oder 2, bei welchem die Schalen (5, 6) mit angeschweißten oder ausgeprägten Anbauteilen (11-13) versehen sind.

4. Instrumententräger nach einem der Ansprüche 1 bis 3, bei welchem die Schalen (5, 6) aus Aluminium oder einer Aluminiumlegierung bestehen.

5. Instrumententräger nach einem der Ansprüche 1 bis 4, bei welchem die Schalen (5, 6) aus Stahlblech bestehen.

## Claims

1. Instrument carrier with integrated air conduction, which can be incorporated between the A-pillars of a passenger vehicle and comprises at least two metallic shells (5, 6) connected to each other and a plastic tube (2) surrounded by the shells (5, 6), the plastic tube (2) being spaced apart at a radial distance from the shells (5, 6), and the shells (5, 6) having flanges (8, 9) which protrude radially and bear against each other, **characterized in that** the end surfaces (10) of the flanges (8, 9) are connected by plasma-arc welding with active focus remote from the nozzle.

2. Instrument carrier according to Claim 1, in which the plastic tube (2) is supported on the inner walls (4) of the shells (5, 6) by means of integrally formed cams (3).

3. Instrument carrier according to Claim 1 or 2, in which the shells (5, 6) are provided with add-on parts (11-13) which are welded onto them or stamped out of them.

4. Instrument carrier according to one of Claims 1 to 3, in which the shells (5, 6) are made from aluminium or an aluminium alloy.

5. Instrument carrier according to one of Claims 1 to 4, in which the shells (5, 6) are made from steel sheet.

## Revendications

1. Porte-instrument avec amenée d'air intégrée, qui peut être intégré entre les colonnes A d'un véhicule de tourisme et qui comprend au moins deux coques métalliques reliées entre elles (5, 6), ainsi qu'un tube plastique (2) entourant les coques (5, 6), le tube plastique (2) étant espacé d'une distance radiale par rapport aux coques (5, 6), et dans lequel les coques (5, 6) présentent des brides (8, 9) en saillie radialement et se raccordant entre elles,
**caractérisé en ce que** les faces frontales (10) des brides (8, 9) sont raccordées par un soudage au plasma avec un foyer effectif éloigné des buses.

2. Porte-instrument selon la revendication 1, dans lequel le tube plastique (2) est maintenu en place sur les parois internes (4) des coques (5, 6) par des cames profilées (3).

3. Porte-instrument selon la revendication 1 ou 2, dans lequel les coques (5, 6) sont munies d'éléments de montage (11-13) soudés ou emboutis.

4. Porte-instrument selon l'une quelconque des revendications 1 à 3, dans lequel les coques (5, 6) sont composées d'aluminium ou d'un alliage d'aluminium.

5. Porte-instrument selon l'une quelconque des revendications 1 à 4, dans lequel les coques (5, 6) sont composées de tôles en acier.
